# EUROPÄISCHE PATENTANMELDUNG

(11) **EP 0 951 125 A2**
(43) Veröffentlichungstag der Anmeldung: **20.10.1999**
(21) Anmeldenummer: 99107222.4
(22) Anmeldetag: 14.04.1999
(51) Int. Cl.: H02G 15/188, H02G 15/184

(54) **Muffenkörper zum Abdecken von Kabeladerendabschnitten**

(30) Priorität: 17.04.1998 DE 19817219; 01.10.1998 DE 19845005
(71) Anmelder: Felten & Guilleaume AG, 51063 Köln (DE)
(72) Erfinder: Hinz, Jürgen, 26954 Nordenham (DE); Meyer, Stephan Heinz, 26919 Brake (DE); Osterwohldt, Karl Heinz, 26954 Nordenham (DE)

(57) **Zusammenfassung**

Die Erfindung betrifft einen Muffenkörper zum Abdecken von Kabeladerendabschnitten in einer Abzweigmuffe für Kabel - vorzugsweise für Mittelspannungskabel - mit mindestens einer Kabelader. Es wird ein Muffenkörper 10,20 zur Abdeckung der Kabeladerendabschnitte 14.1,15.1,15.2 vorgeschlagen, der als elastischer Körper mit mindestens zwei Durchführungen 13',13'' ausgebildet ist und daß im Muffenkörper 10,20 für jede Durchführung 13',13'' ein Feldsteuerelement 16,18,18' einstückig integriert ist.

## Beschreibung

Die Erfindung betrifft einen Muffenkörper zum Abdecken von Kabeladerendabschnitten in einer Abzweigmuffe für Kabel - vorzugsweise für Mittelspannungskabel - mit mindestens einer Kabelader.

Zum Abzweigen von Mittelspannungskabeln in einer Abzweigmuffe wird zum Abdecken der Kabeladerverbindung die Warmschrumpftechnik verwendet. Ein Beispiel wird in der Montageanleitung für eine Abzweigmuffe für geschirmte kunststoffisolierte Einleiterkabel 10 kV und 20 kV 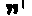 ESD 1943 DE" der Firma Raychem GmbH (10/1996, S. 1-6) beschrieben. Eine andere Art des Abzweigs wird mit Steckmuffen bewerkstelligt; Steckmuffen dieser Art sind unter der Bezeichnung CONNEX-T der Firma Karl Pfisterer Elektrotechische Spezialartikel GmbH & Co KG (Januar 1985, S. 10) bekannt.

Als weiterer Stand der Technik ist ein einteiliger Muffenkörper bekannt, mit einem Körper aus isolierendem Elastomer, in dem mindestens ein leitfähiges Elastomer konzentrisch integriert ist und aus einem durch thermische oder chemische Einwirkung schrumpfbaren Tragkörper, der mittels unlösbarer Materialverbindung mit dem Isolierkörper verbunden ist, wobei sich der Tragkörper außen auf dem Isolierkörper befindet. Im Tragkörper ist ein von außen zugänglicher Leiter, vorzugsweise ein Gewebeschlauch, integriert. Der Muffenkörper ist als Verbindungsmuffe für zwei einadrige Mittelspannungskabel einsetzbar (DE 195 32 559 C2).

In der DE-AS 25 55 653 ist eine Endverschlußgarnitur insbesondere für Dreileiterkabel beschrieben. Einzelne Feldsteuerelemente sind als Hohlzylinder ausgebildet und einstückig mit einer im Innendurchmesser dem Außendurchmesser des Kabelmantels angepaßten Kappe verbunden. Die Einzelelemente sind für verschiedene Leiterquerschnitte einsetzbar. Bei dieser Garnitur ist jeweils die angepaßte Kappe notwendig, die Teil des Aufteilgehäuses ist und gleichzeitig eine Abdichtung darstellt.

Es ist Aufgabe der Erfindung eine Verbesserung der Abzweigtechnik vorzunehmen, bei der die Aufschiebetechnik oder die Kaltschrumpftechnik einsetzbar ist.

Die Lösung der Aufgabe findet sich im 1. Patentanspruch. In den Unteransprüchen sind vorteilhafte Weiterbildungen der Erfindung und eine Verwendung in einem Kabelsteckteil beansprucht.

Die Erfindung besteht im Wesentlichen in einem elastischen Muffenkörper, bei dem zur Abdeckung der Aderendabschnitte mindestens zwei Durchführungen für die Aderendabschnitte ausgebildet sind und im Muffenkörper für jede Durchführung ein Feldsteuerelement integriert ist.

Vorteile der Erfindung sind, daß vorkonstruierte Steckelemente nicht eingesetzt werden müssen, daß die einfachen erfindungsgemäßen Muffenkörper am Montageort ohne umständliche Vorbereitung eingesetzt werden können und daß durch Einsatz der Aufschiebetechnik oder der Kaltschrumpftechnik ein relativ großer Durchmesserbereich, bzw. Leistungsbereich einer Aderverbindung abgedeckt werden kann.

Vorzugsweise ist der Muffenkörper aus Silikonkautschuk. Der Muffenkörper kann - wie bekannt - aufgeweitet auf einem zur Montage entfernbaren Stützkörper gehalten werden. Zur Vereinfachung des Entfernens des Muffenkörpers vom Stützkörper sollte auf dem Stützkörper eine das Gleiten erleichternde Schicht aufgetragen sein.

Zusammen mit dem Muffenkörper kann zusätzlich ein elastisches Muffenrohr eingesetzt werden. Mit diesem Muffenrohr wird ein Außendruck auf den Muffenkörper erzeugbar, so daß insbesondere Muffenkörper und Feldsteuerelemente die Aderendabschnitte vollständig ohne Hohlräume bedecken und rundum ein gleichmäßiger Innendruck auf die Aderendabschnitte vorhanden ist.

Vorzugsweise hat die Erfindung noch folgende Merkmale.

Die Feldsteuerelemente sind einvulkanisiert oder eingeklebt.

Die Leiterdurchführungen im Muffenkörper können je nach Platzbedarf bzw. nach geometrischer Anordnung der Leiter in der Abzweigmuffe parallel nebeneinander oder abweichend von einem parallelen Verlauf geführt sein. Bei der letzteren Ausführungsform können vorzugsweise die Leiterdurchführungen einen auf einen Punkt konvergierenden Verlauf haben. Ausführungsformen mit nicht parallelem Verlauf der Durchführungen haben bei der Montage von Kabeln mit sehr großen Leiterquerschnitten den Vorteil, daß die Leiterenden nicht parallel gebogen oder angeordnet sein müssen.

Der Muffenkörper kann eine ovale Außenform oder eine Kreisform haben. Ein ovale Außenform hat einerseits den Vorteil der Materialerspamis, zum anderen kann durch den Einsatz des erwähnten zusätzlichen elastischen Muffenrohres eine optimale Druckübertragung auf die Kabeladerendabschnitte erfolgen, da die Ovalität die Druckübertragung begünstigt.

Der Muffenkörper ist aus mindestens zwei identischen Teilen aufgebaut ist, wobei jeder Teil einer Leiterdurchführung zugeordnet ist und ein Feldsteuerelement umfaßt. Das Feldsteuerelement ist also einstückig und nicht geteilt. Mit dem eingesetzten elastischen Muffenrohr wird ein Außendruck auf den Muffenkörper erzeugt, der insbesondere dazu beiträgt, daß die Teile des Muffenkörpers sich hohlraumfrei zusammenfügen.

Der Muffenkörper ist in seiner Längsachse geteilt; also parallel zur Anordnung der Durchführungen. Die Teilung des Muffenkörpers derart ist, daß die Trennfläche im Querschnitt (in senkrechter Aufsicht) eine S-Form hat.

Der Muffenkörper nach der Erfindung kann in verschiedenen Anschlußkörpern der Mittelspannungstechnik verwendet werden. Vorzugsweise wird vorgeschlagen, den Muffenkörper in einem Kabelsteckteil für Mittelspannungskabel einzusetzen. Solche Kabelsteckteile können beispielsweise mit einem kapazitivem Adapter ausgerüstet sein, mit dem Spannungs- oder Erdungsmessungen durchführbar sind. In einer solchen Ausführungsform hat der Steckerkörper eine erste Öffnung im axialen Verlauf eines Geräteanschlußteiles und eine in diese mündende zweiten Öffnung für den Kabelanschluß. In der ersten Öffnung ist ein Gewindestift zur elektrischen und mechanischen Verbindung mit dem Geräteanschlußteil für den Kabelanschluß angeordnet, wobei wenigstens zwei Kabel in der zweiten Öffnung geführt und in der ersten Öffnung mit dem Gewindestift verbunden sind. Die Kabel sind im Bereich der zweiten Öffnung abgesetzt und in einem gemeinsamen Feldsteuerkörper mit zwei Durchgängen nach der Erfindung angeordnet und separat in diesem geführt.

Mehrere Ausführungsformen der Erfindung werden in den Figuren dargestellt. Sie zeigen im Einzelnen:
Fig. 1 einen Längsschnitt eines Muffenkörpers mit parallelen Durchführungen,
Fig. 2A einen Querschnitt eines ungeteilten ovalen Muffenkörpers,
Fig. 2B einen Querschnitt eines geteilten Muffenkörpers,
Fig. 3A und 3B zwei perspektivisch dargestellte Muffenkörperhälften,
Fig. 4 einen Muffenkörper mit konvergierenden Durchführungen,
Fig. 5 den Querschnitt des Muffenkörpers nach Fig. 4 mit ovaler Form,
Fig. 6A Längs- und Querschnitt eines Feldsteuerelements mit parallelen Durchführungen,
Fig. 6B ein Feldsteuerelement mit konvergierenden Durchführungen,
Fig. 7 eine Kabelverbindung mit Einfachabzweig,
Fig. 8 eine Kabelverbindung als Doppelabzweig und
Fig. 9 ein Kabelsteckteil für zwei Mittelspannungskabel.

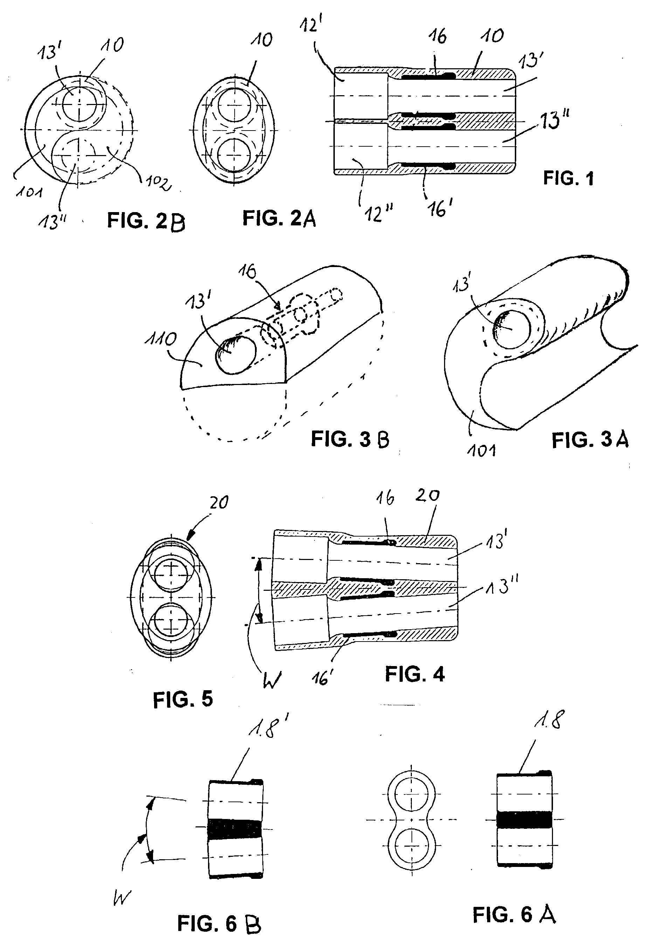

In Fig. 1 wird ein Längsschnitt eines Muffenkörpers 10 mit zwei Leiterdurchführungen 13',13'' gezeigt. Der Längsaufbau entspricht dem von bekannten Muffenkörpern mit Feldsteuerelement. Die bis auf die Isolierung abgemantelten Kabeladerendabschnitte 14.1,15.1,15.2 werden von links eingesteckt, wobei in den Bereich der Feldsteuerelemente 16 16', die nicht entfernte Leitschicht der Kabeladerendabschnitte zu liegen kommt. Die im Durchmesser erweiterten Bohrungen 12',12'' der Durchführungen kommen über der Aderabschirmung zu liegen. Die Leiterdurchführungen 13',13'', haben parallelen Verlauf.

In den Fig. 2A und 2B sind Querschnitte eines Muffenkörpers 10 gezeigt, wobei in Fig. 2A eine ovale Außenform und in Fig. 2B eine kreisrunde Außenform vorliegt. In Fig. 2B ist außerdem eine Teilung des Muffenkörpers 10 in zwei Hälften 101,102 sichtbar. Die Teilung ist derart, daß die Trennfläche im Querschnitt (senkrechter zur Längsrichtung des Muffenkörper) eine S-Form hat. In beiden Hälften 101,102 ist ein Feldsteuerelement integriert.

Die Fig. 3A und 3B zeigen je eine Ausführungsform eines geteilten Muffenkörpers, wobei Fig. 3A eine perspektivische Darstellung des Muffenkörpers nach Fig. 2B wiederholt. Die Teilung des Muffenkörpers wird vorzugsweise so gewählt, daß zwei Muffenkörperhälften (101,110) zusammen einen Gesamtkörper bilden, der nicht aus verschiedenen Hälften besteht. In Fig. 3B wird deutlich, daß in einer Muffenkörperhälfte 110 ein Feldsteuerelement 16 integriert ist.

In Fig. 4 wird ein Längsschnitt durch einen weiteren Muffenkörper 20 gezeigt, in dem die Leiterdurchführungen 13',13'' nicht einen parallel sondern einen auf einen Punkt konvergierenden Verlauf haben. Der Konvergenzwinkel W (siehe auch Fig. 6B) wird vorzugsweise nach dem Platzangebot bzw. der geometrischen Anordnung der Leiterenden in der Abzweigmuffe vorbestimmt. Ansonsten entspricht der Aufbau dem eines Muffenkörpers nach Fig. 1. Fig. 5 zeigt einen zu Fig. 4 zugehörigen ovalen Querschnitt des Muffenkörpers 20.

In Fig. 6A und 6B ist je ein Feldsteuerelement 18,18' dargestellt, das aus leitfähigem Silikonkautschuk nach dem üblichen Verfahren herstellbar und in erfindungsgemäße Muffenkörper integrierbar ist. In Fig. 6A ist der Querschnitt eines Feldsteuerelements 18 gezeigt.

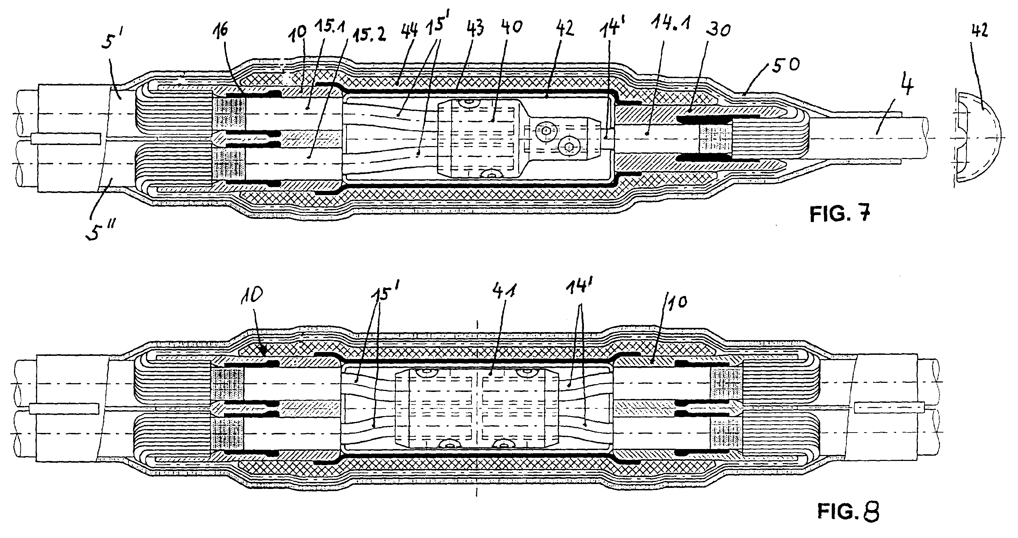

Fig. 7 zeigt den Zusammenbau eines Abzweigs eines von rechts kommenden Kabels 4. Die Stromleitung verzweigt in die beiden links abgehenden Kabel 5' und 5''. Alle Kabeladern sind wie bekannt an ihren Enden abgesetzt und die Leiter 14';15' in einem metallischen Leiterverbinder 40 elektrisch kontaktiert. Die Leiterverbindung wird durch zwei Halbschalen 42 abgedeckt. Die erfindungsgemäßen Muffenkörper überdecken links die Kabeladerenden der Kabel 5' und 5''. Die Einzelader 14' rechts wird von einem in der Ausführung bekannten Aufschiebekörper 30 feldsteuernd abgeschlossen. Die gesamte Anordnung wird von einem elastischen Muffenrohr 44 überdeckt, welches im Bereich der Kontakthalbschalen 42 ebenfalls Feldsteuerteile 43 umfaßt. Als schützenden Außenhülle ist ein Außenmantel 50 aufgebracht, unter dem auch eine Verbindung der Kabelschirme vorhanden ist.

Fig. 8 zeigt eine Kabelverbindung als Doppel- oder H-Abzweig. Die Einzelheiten entsprechen weitgehend der Kabelverbindung nach Fig. 7. Der wesentliche Unterschied besteht darin, daß auf beiden Seiten in der Abzweigmuffe ein erfindungsgemäßer Muffenkörper 10 eingesetzt ist und daß der Leiterverbinder 41 für die Kontaktierung je zweier Leiter 14' und 15' ausgelegt ist.

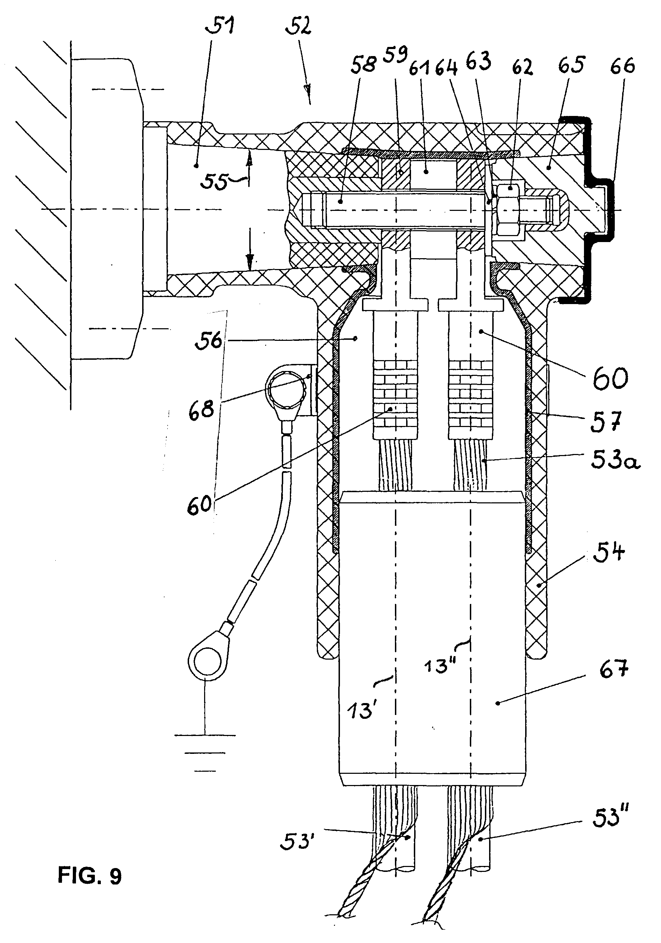

In Fig. 9 ist ein an einem Geräteanschlußteil 51 angeordnetes Kabelsteckteil 52 für zwei Mittelspannungskabel 53 dargestellt. Das Kabelsteckteil 52 weist einen mit einer äußeren Leitschicht versehenen Steckerkörper 54 aus Silikonkautschuk mit einer ersten Öffnung 55 im axialen Verlauf des Geräteanschtußteils 51 und einer zweiten Öffnung 56 für den Anschluß der beiden Kabel 53 auf. In den Steckerkörper 54 sind im Bereich der Öffnung 56 und in derem Einmündungsbereich in der Öffnung 55 Feld-Glättungshülsen 57 integriert. In der Öffnung 55 ist ein Gewindestift 58 angeordnet, der in das Geräteanschlußteil 51 geschraubt ist und an dem die mit Bohrungen für den Gewindestift 58 versehenen Anschlußfahnen 59 zweier, jeweils an dem Ende des Leiters 53a des abgesetzten Kabels 53 angeordneter Preßkabelschuhe 60 angeordnet sind. Im Bereich zwischen den Anschlußfahnen 59 ist im Steckerkörper 54 ein verzinntes Verbindungsstück 61 aus Kupfer eingelegt. Die Anschlußfahnen 59 sind durch eine Spannmutter 62, die über einen Federring 63 und eine Scheibe 64 an der dem Geräteanschlußteil 51 abgewandten Anschlußfahne 59 angreift, am Geräteanschlußteil 51 festgelegt.

Der Steckerkörper 54 ist mit einem spannungsfesten Schraubeinsatz 65 und einer Abdeckkappe 66 abgeschlossen.

Die Kabel 53 sind in einem vom Steckerkörper 54 fest umschlossenen gemeinsamen Feldsteuerkörper 67 mit einem runden oder ovalen Querschnitt und zwei Durchführungen 13',13'' abgesetzt und separat geführt. An dem mit einer äußeren Leitschicht versehenen Steckerkörper 54 ist eine Erdungsschelle 68 angeordnet, über die die Leitschicht geerdet ist.

## Patentansprüche

1. Muffenkörper zum Abdecken von Kabeladerendabschnitten (**14.1,15.1,15.2**) in einer Abzweigmuffe für Kabel - vorzugsweise für Mittelspannungskabel - mit mindestens einer Kabelader (**4**), wobei der Muffenkörper (**10,20**) als elastischer Körper mit mindestens zwei Durchführungen (**13',13''**) ausgebildet ist und im Muffenkörper (**10,2**0) für jede Durchführung (**13', 13''**) ein Feldsteuerelement (**16,18, 18'**) integriert ist.

2. Muffenkörper nach Anspruch 1, **dadurch gekennzeichnet**, daß die Feldsteuerelemente (**16,18, 18'**) einvulkanisiert oder eingeklebt sind.

3. Muffenkörper nach Anspruch 1 oder 2, **dadurch gekennzeichnet**, daß die Durchführungen (**13', 13''**) im Muffenkörper (**10,20**) parallel nebeneinander geführt sind.

4. Muffenkörper nach Anspruch 1 oder 2, **dadurch gekennzeichnet**, daß die Durchführungen (**13', 13''**) im Muffenkörper (**10,20**) nebeneinander abweichend von einem parallelen Verlauf geführt sind.

5. Muffenkörper nach Anspruch 4, **dadurch gekennzeichne**t, daß die Durchführungen (**13',13''**) einen auf einen Punkt konvergierenden Verlauf haben.

6. Muffenkörper nach einem der vorhergehenden Ansprüche, **dadurch gekennzeichnet**, daß der Muffenkörper (**10,20**) eine ovale Außenform hat.

7. Muffenkörper nach einem der vorhergehenden Ansprüche, **dadurch gekennzeichnet**, daß der Muffenkörper (**10,20**) aus mindestens zwei identischen Teilen (**101,110**) aufgebaut ist, wobei jedem Teil eine Durchführung (**13'**) zugeordnet ist und jedes Teil ein Feldsteuerelement (**16**) umfaßt.

8. Muffenkörper nach Anspruch 7, **dadurch gekennzeichnet**, daß der Muffenkörper (**10,20**) in seiner Längsachse geteilt ist.

9. Muffenkörper nach Anspruch 8, **dadurch gekennzeichnet**, daß die Teilung des Muffenkörpers (**10,20**) derart ist, daß die Trennfläche im Querschnitt senkrecht zur Längsachse eine S-Form hat.

10. Muffenkörper nach einem der vorhergehenden Ansprüche, **dadurch gekennzeichnet**, daß der Muffenkörper (**10,20**) aus Silikonkautschuk ist.

11. Verwendung eines Muffenkörpers nach einem der vorhergehenden Ansprüche, in einem Kabelsteckteil für Mittelspannungskabel mit einem Steckerkörper mit einer ersten Öffnung (**55**) im axialen Verlauf eines Geräteanschlußteiles (**51**) und einer in diese mündenden zweiten Öffnung (**56**) für den Kabelanschluß, einem in der ersten Öffnung (**55**) angeordneten Gewindestift (**58**) zur elektrischen und mechanischen Verbindung mit dem Geräteanschlußteil (**51**) für den Kabelanschluß, wobei wenigstens zwei Kabel (**53**) in der zweiten Öffnung (**56**) geführt und in der ersten Öffnung (**55**) mit dem Gewindestift (**58**) verbunden sind, wobei die Kabel (**53**) im Bereich der zweiten Öffnung (**56**) abgesetzt und in einem gemeinsamen Feldsteuerkörper (**67**) angeordnet und separat in diesem geführt sind.
